Europäisches Patentamt

European Patent Office

Office européen des brevets

(11) Publication number: **0 038 218**
**B1**

(12) **EUROPEAN PATENT SPECIFICATION**

(45) Date of publication of patent specification: **13.02.85**

(51) Int. Cl.⁴: **B 63 B 27/24, F 16 L 1/04**

(21) Application number: **81301654.0**

(22) Date of filing: **14.04.81**

(54) Float for loading hoses.

(30) Priority: **14.04.80 JP 50242/80 u**

(43) Date of publication of application:
**21.10.81 Bulletin 81/42**

(45) Publication of the grant of the patent:
**13.02.85 Bulletin 85/07**

(84) Designated Contracting States:
**FR GB IT NL**

(56) References cited:
**DE-A-2 806 023**
**DE-B-1 506 724**
**US-A-2 395 892**

(73) Proprietor: **BRIDGESTONE TIRE COMPANY
LIMITED**
**10-1, Kyobashi 1-Chome Chuo-Ku**
**Tokyo (JP)**

(72) Inventor: **Kadono, Mamoru**
**150-7, Kashio-cho Totsuka-Ku**
**Yokohama City (JP)**

(74) Representative: **Whalley, Kevin et al**
**Marks & Clerk 57/60 Lincoln's Inn Fields**
**London WC2A 3LS (GB)**

Courier Press, Leamington Spa, England.

## Description

This invention relates to a float for loading hoses operative to connect a pipe line laid on the seabed to a marine hose connected to a ship.

Such a float is usually fitted around a hose of a loading hose line for connecting a buoy that floats on water and connected to the marine hose to the pipe line laid on the seabed and functions to cause the loading hose line to form a suitable catenary line for the purpose of causing the loading hose line to be flexibly movable in response to sea-waves without buckling.

The above mentioned kind of float is usually composed of two semi-annular hard floating bodies each provided therein with a floating material. These two semi-annular floating bodies are provided at one of the end portions thereof with a depression and projection which are hinged by means of a pin and at the other end portions thereof with rectangular notches opposed with each other (DE—A—2806023), and wherein the notches are extended through by pins, respectively. Around one of these pins is fitted a bearing member which is connected through a turnbuckle to a hook fastened to the other pin. The turnbuckle functions to impart forces to the pins so as to cause them to approach each other.

Such a conventional float for loading hoses has the drawback that many years of use result not only in bending of the pins but also in opening of the hook, thereby disengaging the float from the loading hose. Many attempts have been made to eliminate such drawbacks, but none had led to satisfactory results.

An object of the present invention, therefore, is to provide a float for loading hoses which can eliminate the above-mentioned drawbacks which have been encountered with the prior art techniques.

The present invention provides a float for loading hoses, comprising a pair of semi-annular hard floating bodies, a pin extending through one end portion of each of the semi-annular floating bodies and constituting a hinge about which the semi-annular floating bodes may pivot, a pair of opposed notches formed at the other end portions of the semi-annular floating bodies, characterized by a female screw threaded member secured in one of the notches by means of a pin extending through the said notch and having a width which is substantially equal to the width of the said notch, a hook shaped member adapted to be engaged with a pin extending through the other notch and having a width which is substantially equal to the width of the other notch, and a bolt provided at the end portions thereof with screw threads inclined in opposite directions and threadedly engaged with the female screw threaded member and the hook shaped member respectively, whereby when the bolt is fastened to fit the float around a loading hose the said pin is housed in a space defined by a hook portion of the hook-shaped member and the respective end of the bolt as to prevent the said respective pin from being disengaged from the hook-shaped member.

The invention will be further described, by way of example only, with reference to the accompanying drawings, wherein:

Figure 1 is a perspective view of a conventional float for loading hoses;

Figure 2 is a fragmentary perspective view of one embodiment of a float for loading hoses according to the present invention;

Figure 3A is an enlarged cross-sectional view showing the bolt of the float shown in Figure 2 having its end portions threadedly engaged with a female screw threaded member and with a hook-shaped member, respectively;

Figure 3B is a view similar to Figure 3A and showing the bolt having end portions urged against pins extending through the female screw threaded member and the hook-shaped member, respectively;

Figure 4A and 4B are enlarged cross-sectional views of another embodiment of a float for loading hoses according to the present invention, in which end portions of the bolt make contact with the lower surfaces of pins extending through a female screw threaded member and a hook-shaped member when the bolt is fastened to fit the float around a loading hose; and

Figures 5A and 5B are enlarged cross-sectional views of a further embodiment of a float for loading hoses according to the present invention, in which one end portion of the bolt makes contact with the upper surface of a pin extending through a female screw threaded member while the other end portion of the bolt makes contact with the lower surface of a pin extending through a hook-shaped member when the bolt is fastened to fit the bolt around a loading hose.

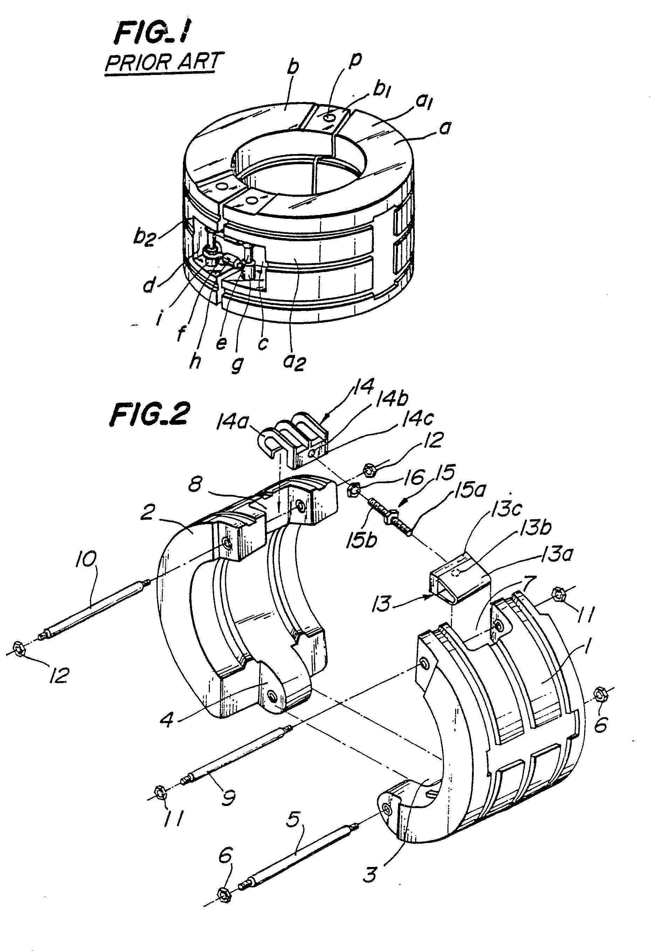

Figure 1 shows a conventional float for loading hoses which is composed of a pair of semi-annular hard floating bodies a, b each including therein a floating material. The floating bodies a, b are provided at one of the end portions $a_1$, $b_1$ thereof with a depression and projection mutually engaged and hinged with each other by means of a pin p extending through the depression and projections. The floating bodies a, b are respectively provided at the other end portions $a_2$, $b_2$ thereof with rectangular notches c, d opposed with each other and respectively extended through by pins e, f. Around one of the pins, for example, the pin e, is fitted a bearing member g which is connected through a turnbuckle h to a hook i. The hook i engages the other pin f. The turnbuckle h functions to impart forces to ths pins e, f so as to allow these pins to come near to each other. As a result, many years of use result not only in bending of the pins e, f but also in opening of the hook 1. Thus, there is a risk of the float being disengaged from the loading hose about which it is applied.

Figure 2 shows one embodiment according to the present invention of a float for loading hoses, which float comprises semi-annular floating bodies 1, 2 respectively provided at one of the ends thereof with a depression 3 and a projection 4. The depression 3 and the projection 4 engage each other and have a common hole extended through by a pin 5 is threadedly engaged at its ends with nuts 6, such that the semi-annular floating bodies 1, 2 are hinged at one of the ends thereof.

The semi-annular floating bodies 1, 2 are respectively provided at the other ends thereof with rectangular notches 7, 8 opposed with each other. These notches 7, 8 are extended through by pins 9, 10, respectively, which are threadedly engaged at the ends thereof by nuts 11, 12, respectively.

With one of these pins 9, 10, for example the pin 9, is engaged a female screw threaded member 13 having a width which is substantially equal to the width of the notch 7 and composed of a U-shaped member 13a open at the end thereof facing the notch 8 and of a face plate 13c secured to that end of the member 13 which is adjacent the notch 8 and provided at its center portion with a tapped hole 13b. With the other pin 10 is engaged a hook-shaped member 14 having a width which is substantially equal to the width of the notch 8. The hook-shaped member 14 is composed of a hook portion 14a and of a face plate 14c located at that end of the member 14 which is adjacent the notch 7 and provided with a tapped hole 14b.

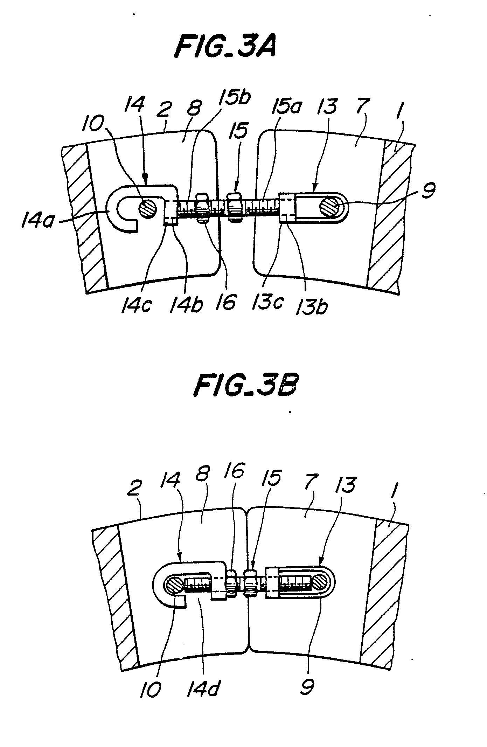

The tapped holes 13b, 14b are provided with oppositely inclined screw threads, and a bolt 15 is provided at its end portions with oppositely inclined screw threads 15a, 15b simultaneously engaged with the tapped holes 13b, 14b respectively, as shown in Figure 3A.

When fitting the float around a loading nose (not shown), the bolt 15 is fastened into the female screw threaded member 13 and the hook-shaped member 14 until the opposed end surfaces of the semi-annular floating bodies 1, 2 are brought into contact with each other as shown in Figure 3B. A lock nut 16 is operative to maintain the bolt 15 in its tightened position.

As shown in Figure 3B, in the fastening position of the bolt 15, the end surface of the bolt 15 makes contact with the pin 10 or comes near the pin 10, so that it is possible to prevent the pin 10 from disengaging from the hook-shaped member 14 through an opening 14d in a positive manner.

In addition, the use of a U-shaped member 13a the lengthwise direction of which is sufficiently long allows the end surface of the bolt 15 located in the female screw threaded member 13 to move without restricting the fastening action of the bolt 15.

The float for loading hoses constructed as above described has the advantages that the use of female screw threaded member 13 and the hook-shaped member 14, both of which are relatively wide compared to the corresponding members utilized in the prior art construction shown in Figure 1, ensures a distribution of the force applied to the bolt 15 in its tensile direction over substantially all of the exposed direction of the pins 9, 10, and as a result it is possible to effectively prevent the pins 9, 10 and the hook portion of the hook-shaped member from being deformed due to concentration of the stress; and also even when the opening 14d of the hook-shaped member 14 is deformed so as to become relatively larger after the float has been used for many years, the end surface of the bolt 15 extending into the hook-shaped member 14 and making contact with the pin 10 or located near it functions to make the opening 14d relatively narrow and hence it is possible to prevent the pin 10 from disengaging from the opening 14d of the hook-shaped member 14 in a positive manner.

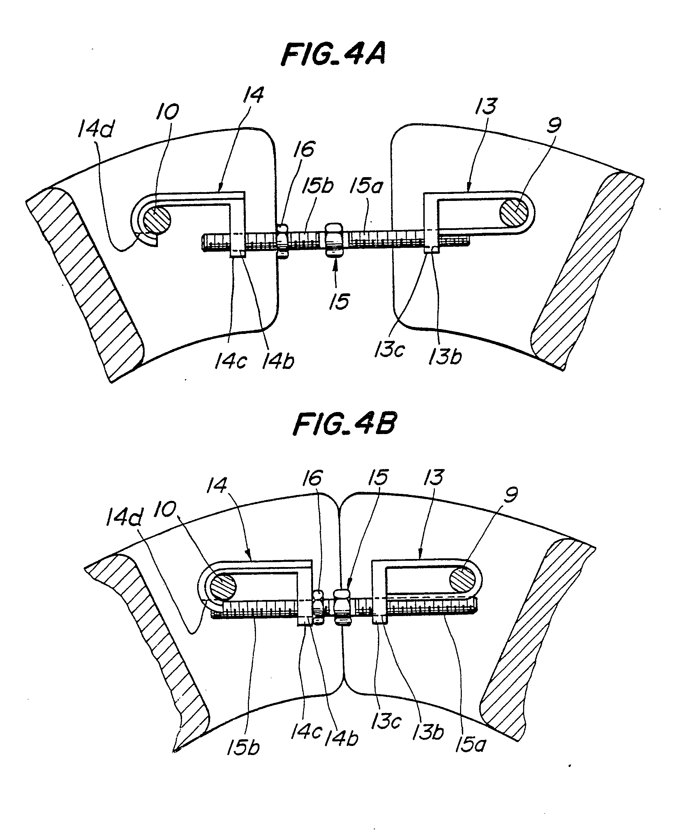

Figures 4A and 4B show another embodiment of a float according to the invention. In the present embodiment, a bolt 15 is constructed and arranged such that when it is fastened so as to fit the float around a loading hose (not shown) the ends of the oppositely inclined screw threaded portions 15a, 15b of the bolt 15 make contact with the lower (radially innermost) surfaces of the pins 9, 10 as shown in Figure 4B. In this embodiment, the tapped holes 13b, 14b of the female screw threaded member 13 and the hook-shaped member 14 are so formed that the bolt 15 does not make contact with the female screw threaded member 13 and hook-shaped member 14.

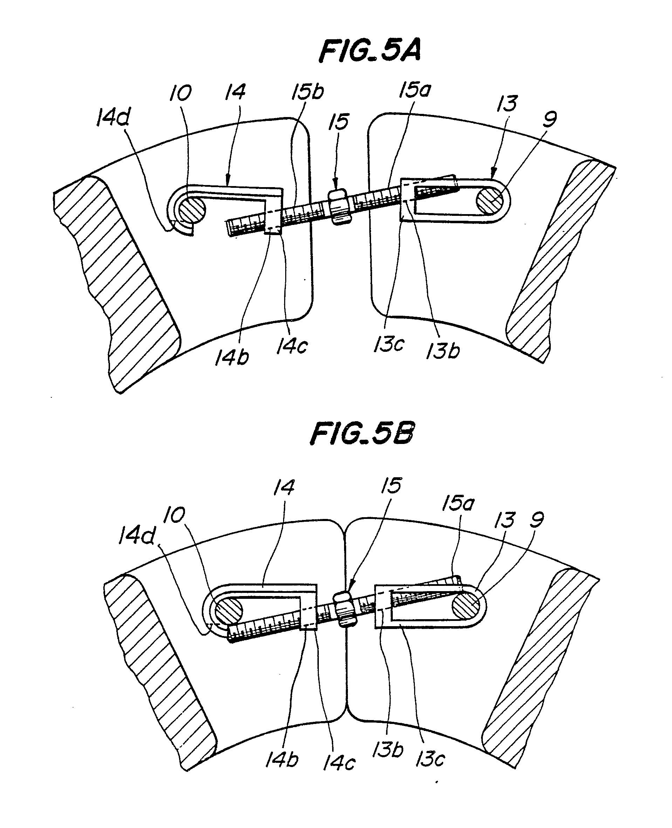

Figures 5A and 5B show a further embodiment of a float according to the invention. In the present embodiment, a bolt 15 is constructed and arranged such that when it is fastened so as to fit the float around a loading hose (not shown) the end of the screw threaded portion 15a of the bolt 15 makes contact with the upper (radially outermost) surface of the pin 8, while the end of the screw threaded portion 15b makes contact with the lower (radially innermost) surface of the pin 10 as shown in Figure 5B. In this embodiment, the tapped holes 13b, 14b of the female screw threaded member 13 and the hook-shaped member 14 are so formed that the bolt 15 does not make contact with the female screw threaded member 13 and hook-shaped member 14.

The embodiments shown in Figures 4A, 4B and 5A, 5B make it possible to use a long bolt 15 irrespective of the size of the float.

As stated hereinbefore, the float according to the invention for loading hoses is capable of not only effectively preventing the deformation of the pins 9, 10 and the hook-shaped member 14 but also of positively preventing the pin 10 from being disengaged from the hook-shaped member 14.

**Claims**

1. A float for loading hoses, comprising a pair of semi-annular hard floating bodies (1, 2), a pin (5) extending through one end portion of each of the semi-annular floating bodies and constituting a hinge about which the semi-annular floating bodies may pivot, and a pair of opposed notches (7, 8) formed at the other end portions of the semi-annular floating bodies, characterized by a female screw threaded member (13) secured in one of the notches (7) by means of a pin (9) extending through the said notch and having a width which is substantially equal to the width of the said notch, a hook-shaped member (14) adapted to be engaged with a pin (10) extending through the other notch (8) and having a width which is substantially equal to the width of the other notch, and bolt (15) provided at the end portions thereof with screw threads (15a, 15b) inclined in opposite directions and threadedly engaged with the female screw threaded member (13) and the hook-shaped member (14) respectively, whereby when the bolt is fastened to fit the float around a loading hose the said pin (10) is housed in a space defined by a hook portion (14a) of the hook-shaped member (14) and the respective end of the bolt (15) as to prevent the said pin (10) from being disengaged from the hook-shaped member.

2. A float as claimed in Claim 1, characterized in that the end surfaces of the bolt make contact with the said pins extending through the female screw threaded member and the hook-shaped member when the bolt is fastened to fit the float around a loading hose.

3. A float as claimed in Claim 1, characterized in that the end portions of the bolt make contact with the radially inner surfaces of the said pins extending through the female screw threaded member and the hook-shaped member when the bolt is fastened to fit the float around a loading hose.

4. A float as claimed in Claim 1, characterized in that one end portion of the bolt makes contact with the radially outer surface of the said pin extending through the female screw threaded member while the other end portion of the bolt makes contact with the radially inner surface of the said pin extending through the hook-shaped member when the bolt is fastened to fit the float around a loading hose.

**Revendications**

1. Flotteur pour tuyaux chargement comprenant deux corps flottants semi-annulaires durs (1, 2), un axe (5) traversant une partie extrême de chacun de ces corps flottants semi-annulaires et constituant une charnière autour de laquelle ceux-ci, peuvent pivoter, et deux encoches opposées (7, 8) ménagées dans les autres parties extrêmes des corps flottants semi-annulaires, caractérisé par un élément à filetage femelle (13) fixé dans l'une (7) des encoches par un axe (9) traversant cette encoche, et ayant une largeur sensiblement égale à la largeur de cette encoche, un élément en forme de crochet (14) conçu pour que s'y engage un axe (10) traversant l'autre encoche (8), et ayant un largeur sensiblement égale à la largeur de cette autre encoche, et un boulon (15) pourvu dans ses parties extrêmes de filetages (15a, 15b) de sens contraires et en prise par ceux-ci respectivement avec l'élément à filetage femelle (13) et l'élément en forme de crochet (14), de sorte que lorsque ce boulon est fixé pour ajuster le flotteur autour d'un tuyau de chargement, ledit axe (10) est logé dans un espace délimité par une partie crochet (15a) de l'élément en forme de crochet (14) et l'extrémité correspondante du boulon (15) de façon que ledit axe (10) ne puisse pas se dégager de l'élément en forme de crochet.

2. Flotteur selon la revendication 1, caractérisé en ce que lorsque le boulon est fixé pour ajuster le flotteur autour d'un tuyau de chargement, ses surfaces d'extrémité sont en contact avec les axes qui traversent l'élément à filetage femmelle et l'élément en forme de crochet.

3. Flotteur selon la revendication 1, caractérisé en ce que lorsque le boulon est fixé pour ajuster le flotteur autour d'un tuyau de chargement, ses parties extrêmes sont en contact avec les surfaces intérieures radialement des axes qui traversent l'élément à filetage femelle et l'élément en forme de crochet.

4. Flotteur selon la revendication 1, caractérisé en ce que lorsque le boulon est fixé pour ajuster le flotteur autour d'un tuyau de chargement, une de ses parties extrêmes est en contact avec la surface extérieure radialement de l'axe qui traverse l'élément à filetage femelle tandis que son autre partie extrême est en contact avec la surface intérieure radialement de l'axe qui traverse l'élément en forme de crochet.

**Patantansprüche**

1. Schwimmkörper für Ladeschläuche mit zwei halbringförmigen, harten Schwimmelementen (1, 2), mit einem durch ein Ende jedes der halbringförmigen Schwimmelemente hindurchgehenden Zapfen, (5), der ein Gelenk bildet, um das die halbringförmigen Schwimmelemente schwenkbar sind, und mit einem Paar von an den anderen Enden der halbringsförmigen Schwimmelemente vorgesehenen, einander gegenüberliegenden Ausnehmungen (7, 8), dadurch gekennzeichnet, daß ein mit einer Gewindebohrung versehenes Element (13) vorgesehen ist, welches innerhalb der einen Ausnehmung (8) mit Hilfe eines Zapfens (9) gehaltet ist, der sich durch diese Ausnehmung hindurch erstreckt, wobei die Breite dieses Elementes im wesentlichen gleich der Breite der Ausnehmung ist, daß ein hakenförmiges Element (14) vorgesehen ist, welches mit einem durch die andere Ausnehmung (8) hindurchgehenden Zapfen (10) in Eingriff bringbar ist und eine Breite besitzt, die im wesentlichen gleich der Breite der anderen Ausnehmung ist, und daß ein gewindebolzen (15) mit gegenläufigen Gewindebereichen (15a, 15b) an seinen Enden vorgesehen ist, welche in das mit der Gewindebohrung versehene Element (13) bzw. in das hakenförmige Element (14) derart eingeschraubt werden, daß beim Anziehen des Gewindebolzens zum passenden Herumlegen des Schwimmkörpers um eine Ladeschlauch der (eine) Zapfen (10) von einem durch ein hakenförmiges Teilstück (14a) des hakenförmigen Elements (14) und das betreffende Ende des Gewindebolzens (15) definierten Hohlraum aufgenommen wird, um zu verhindern, daß der Zapfen (18) außer Eingriff mit dem hakenförmigen Element gelangt.

2. Schwimmkörper nach Anspruch 1, dadurch gekennzeichnet, daß beim Festziehen des Gewindebolzens zum engen Herumlegen des Schwimmkörpers um einen Ladeschlauch die Endflächen des Gewindebolzens in Kontakt mit dem Zapfen gelangen, welche das mit der Gewindebohrung versehene Element und das hakenförmige Element durchgreifen.

3. Schwimmkörper nach Anspruch 1, dadurch gekennzeichnet, daß beim Festziehen des Gewindebolzens zum passenden Herumlegen des Schwimmkörpers um einen Ladeschlauch die Endbereiche des Gewindebolzens in Kontakt mit den radial inneren Flächen der Zapfen gelangen, die das mit der Gewindebohrung versehene Element und das hakenförmige Element durchgreifen.

4. Schwimmkörper nach Anspruch 1, dadurch gekennzeichnet, daß beim Festziehen des Gewindebolzens zum engen Herumlegen des schwimmkörpers um einen Ladeschlauch der eine Endbereich des Gewindebolzens in Kontakt mit der radial äußeren Fläche des Zapfens gelangt, welcher das mit der Gewindebohrung versehene Element durchgreift, während der andere Endbereich des Gewindebolzens in Kontakt mit der radial inneren Fläche des Zapfens gelangt, welcher das hakenförmige Element durchgreift.

## FIG.1
### PRIOR ART

## FIG.2

# FIG. 3A

# FIG. 3B

# FIG.4A

# FIG.4B

## FIG.5A

## FIG.5B

4